# EUROPEAN PATENT SPECIFICATION

(11) **EP 3 452 531 B1**
(45) Date of publication and mention of the grant of the patent: **15.04.2020**
(21) Application number: 18702312.2
(22) Date of filing: 05.02.2018
(51) Int. Cl.: C08G 65/40, C08L 71/00, C08L 81/06

(54) **METHOD FOR MANUFACTURING A THREE-DIMENSIONAL OBJECT USING PAEK AND PAES**
VERFAHREN ZUR HERSTELLUNG EINES DREIDIMENSIONALEN OBJEKTS MIT PAEK UND PAES
PROCÉDÉ DE FABRICATION D'UN OBJET TRIDIMENSIONNEL À L'AIDE DE PAEK ET DE PAES

(30) Priority: 06.02.2017 US 201762455087 P; 08.03.2017 EP 17159923
(43) Date of publication of application: 13.03.2019
(60) Divisional application: 19158542.1
(73) Proprietor: Solvay Specialty Polymers USA, LLC, Alpharetta, Georgia 30005-3914 (US)
(72) Inventor: JEOL, Stéphane, Cumming Georgia 30041 (US); SINGLETARY, Nancy J., Alpharetta Georgia 30004 (US); EL-HIBRI, Mohammad Jamal, Atlanta Georgia 30350 (US); AXELRAD, Shari W, Atlanta Georgia 30319 (US); VAN, Hai, Norcross GE 30093 (US)
(74) Representative: Fiorucci, Hélène
(86) International application number: PCT/EP2018/052834
(87) International publication number: WO 2018/141973

(56) References cited:
- EP-A1- 2 123 430
- WO-A1-2014/037374
- US-A1- 2016 122 541

## Description

### Related applications

This application claims priority to U.S. provisional application No. US 62/455087 filed on February 6, 2017 and to European patent application No. 17159923.6 filed on March 8, 2017.

### Technical Field

The present disclosure relates to a method for manufacturing three-dimensional (3D) objects using an additive manufacturing system, wherein the 3D object is printing from a part material comprising a combination of at least one poly(aryl ether ketone) polymer (PAEK) and at least one poly(aryl ether sulfone) (PAES). In particular, the present disclosure relates to a part material incorporating at least a PAEK and at least a PAES, for example in the form of filaments for use in additive manufacturing systems to print 3D objects.

### Background Art

Additive manufacturing systems are used to print or otherwise build 3D parts from digital representations of the 3D parts using one or more additive manufacturing techniques. Examples of commercially available additive manufacturing techniques include extrusion-based techniques, selective laser sintering, powder/binder jetting, electron-beam melting and stereolithography processes. For each of these techniques, the digital representation of the 3D part is initially sliced into multiple horizontal layers. For each sliced layer, a tool path is then generated, which provides instructions for the particular additive manufacturing system to print the given layer.

For example, in an extrusion-based additive manufacturing system, a 3D part may be printed from a digital representation of the 3D part in a layer-by-layer manner by extruding and adjoining strips of a part material. The part material is extruded through an extrusion tip carried by a print head of the system, and is deposited as a sequence of roads on a platen in an x-y plane. The extruded part material fuses to previously deposited part material, and solidifies upon a drop in temperature. The position of the print head relative to the substrate is then incremented along a z-axis (perpendicular to the x-y plane), and the process is then repeated to form a 3D part resembling the digital representation. An example of extrusion-based additive manufacturing system starting from filaments is called Fused Filament Fabrication (FFF).

As another example, in a powder-based additive manufacturing system, a powerful laser is used to locally sinter powder into a solid part. A 3D part is created by sequentially depositing a layer of powder followed by a laser pattern to sinter an image onto that layer. An example of powder-based additive manufacturing system starting from powder is called Selective Laser Sintering (SLS).

As another example yet, carbon-fiber composites 3D part can be prepared using the continuous Fiber-Reinforced Thermosplastic (FRTP) printing method. The printing is based on fused-deposition modeling (FDM) and combines fibers and resin in a nozzle.

One of the fundamental limitations associated with known additive manufacturing methods is the incomplete consolidation of the resulting part, which manifests itself as a lower density relative to a comparable injection molded part and which often leads to downgraded mechanical properties. Thus, FFF results in a part generally exhibiting a lower strength than a comparable injection molded part. This reduction in strength, notably in impact resistance and in tensile properties, may be due to weaker bonding between the adjoining strips of deposited part material, as well as air pockets and voids, as compared to material formed, for example, by injection molding.

There is therefore a need for polymeric part material to be used in additive manufacturing systems, for example FFF, SLS or FRTP printing methods, which make possible the manufacture of 3D objects having a density comparable to injection molded part, as well as a set of mechanical properties (e.g. tensile properties and impact resistance) comparable or even better than injection molded parts.

### Summary of invention

The present invention is described in the claims.

The applicant has found that the selection of a poly(aryl ether ketone) (PAEK) having a weight average molecular weight (Mw) ranging from 75,000 to 150,000 g/mol, with a poly(aryl ether sulfone) (PAES), in a specific weight ratio, make possible the manufacture of 3D objects having a density comparable to injection molded part. The 3D objects also present a set of mechanical properties (e.g. tensile properties and impact resistance) comparable to injection molded parts, and even sometimes improved in comparison to injection molded parts.

The 3D objects or articles obtainable by such method of manufacture can be used in a variety of final applications. Mention can be made in particular of implantable device, dental prostheses, brackets and complex shaped parts in the aerospace industry and under-the-hood parts in the automotive industry.

### Description of embodiments

The present invention relates to a method for manufacturing a three-dimensional (3D) object with an additive manufacturing system, such as an extrusion-based additive manufacturing system (for example FFF), a continuous Fiber-Reinforced Thermosplastic (FRTP) printing method.

The method of the present invention comprises the steps of:
- providing a part material in the form of a filament, comprising a polymeric component which comprises:
   a) from 55 to 95 wt.% of at least one poly(aryl ether ketone) (PAEK) having a weight average molecular weight (Mw) ranging from 75,000 to 150,000 g/mol, for example from 82,000 to 140,000 g/mol or from 85,000 to 130,000 g/mol, as determined by gel permeation chromatography (GPC) using phenol and trichlorobenzene (1:1) at 160°C, with polystyrene standards,
   b) from 5 to 45 wt.% of at least one poly(aryl ether sulfone) (PAES), based on the total weight of the polymeric component of the part material, and
- printing layers of the three-dimensional (3D) object from the part material which comprises extruding the part material.

The merit of the applicant has been to identify a composition of matter, also called hereby part material, which make possible the manufacture of 3D objects having a mechanical property profile (i.e. tensile strength, tensile elongation and impact resistance) comparable or even better than injection molded parts. This composition of matter is based on a combination of at least two distinct aromatic polymers: a poly(aryl ether ketone) (PAEK) having a weight average molecular weight (Mw) ranging from 75,000 to 150,000 g/mol, for example from 82,000 to 140,000 g/mol or from 85,000 to 130,000 g/mol, (as determined by gel permeation chromatography (GPC) using phenol and trichlorobenzene (1:1) at 160°C, with polystyrene standards), and a poly(aryl ether sulfone) (PAES), used in a specific weight ratio.

The expression "part material" hereby refers to a blend of material, notably polymeric compounds, intended to form at least a part of the 3D object. The part material is according to the present invention used as feedstocks to be used for the manufacture of 3D objects or part of 3D objects.

The method of the present invention indeed employs the polymer combination as the main element of the part material, which can for example be shaped in the form of a filament to build a 3D object (e.g. a 3D model, a 3D article or a 3D part).

According to an embodiment, the part material is in the form of a filament. The expression "filament" refers to a thread-like object or fiber formed of a blend of materials which according to the present invention comprises a combination of at least two polymers, more precisely a poly(aryl ether ketone) (PAEK) having a weight average molecular weight (Mw) ranging from 75,000 to 150,000 g/mol, for example from 82,000 to 140,000 g/mol or from 85,000 to 130,000 g/mol, as determined by gel permeation chromatography (GPC) using phenol and trichlorobenzene (1:1) at 160°C, with polystyrene standards (PAES).

The filament may have a cylindrical or substantially cylindrical geometry, or may have a non-cylindrical geometry, such as a ribbon filament geometry; further, filament may have a hollow geometry, or may have a core-shell geometry, with another polymeric composition, being used to form either the core or the shell.

According to an embodiment of the invention, the method for manufacturing a three-dimensional object with an additive manufacturing system comprises a step consisting in extruding the part material. This step may for example occurs when printing or depositing strips or layers of part material. The method for manufacturing 3D objects with an extrusion-based additive manufacturing system is also known as fused filament fabrication technique (FFF).

FFF 3D printers are, for example, commercially available from Indmatech, from Roboze or from Stratasys, Inc. (under the trade name Fortus®). SLS 3D printers are, for example, available from EOS Corporation under the trade name EOSINT®P. FRTP 3D printers are, for example, available from Markforged.

### Part material

The part material employed in the method of the present invention comprises a polymeric component which comprises:
a) from 55 to 95 wt.% of at least one poly(aryl ether ketone) (PAEK) having a weight average molecular weight (Mw) ranging from 75,000 to 150,000 g/mol, for example from 82,000 to 140,000 g/mol or from 85,000 to 130,000 g/mol, as determined by gel permeation chromatography (GPC) using phenol and trichlorobenzene (1:1) at 160°C, with polystyrene standards,
b) from 5 to 45 wt.% of at least one poly(aryl ether sulfone) (PAES), based on the total weight of the polymeric component of the part material.

The part material of the invention may include other components. For example the part material may comprise at least one additive, notably at least one additive selected from the group consisting of fillers, colorants, lubricants, plasticizers, stabilizers, flame retardants, nucleating agents and combinations thereof. Fillers in this context can be reinforcing or non-reinforcing in nature.

In embodiments that include fillers, the concentration of the fillers in the part material ranges from 0.5 wt.% to 30 wt.%, with respect to the total weight of the part material. Suitable fillers include calcium carbonate, magnesium carbonate, glass fibers, graphite, carbon black, carbon fibers, carbon nanofibers, graphene, graphene oxide, fullerenes, talc, wollastonite, mica, alumina, silica, titanium dioxide, kaolin, silicon carbide, zirconium tungstate, boron nitride and combinations thereof.

According to one embodiment, the part material of the present invention comprises:
- a polymeric component comprising:
   a) from 57 to 85 wt.% or from 60 to 80 wt.% of at least one poly(aryl ether ketone) (PAEK) having a weight average molecular weight (Mw) ranging from 75,000 to 150,000 g/mol, for example from 82,000 to 140,000 g/mol or from 85,000 to 130,000 g/mol (as determined by gel permeation chromatography (GPC) using phenol and trichlorobenzene (1:1) at 160°C, with polystyrene standards), and
   b) from 15 to 43 wt.% or from 20 to 40 wt.% of at least one poly(aryl ether sulfone) (PAES),
   based on the total weight of the polymeric component, and
- from 0 to 30 wt.% of at least one additive, for example selected from the group consisting of fillers, colorants, lubricants, plasticizers, flame retardants, nucleating agents and stabilizers, based on the total weight of the part material.

According to another embodiment, the part material of the present invention consists essentially of:
- a polymeric component comprising:
   a) from 55 to 95 wt.%, from 57 to 85 wt.% or from 60 to 80 wt.% of at least one poly(aryl ether ketone) (PAEK) having a weight average molecular weight (Mw) ranging from 75,000 to 150,000 g/mol, for example from 82,000 to 140,000 g/mol or from 85,000 to 140,000 g/mol, as determined by gel permeation chromatography (GPC) using phenol and trichlorobenzene (1:1) at 160°C, with polystyrene standards, and
   b) from 5 to 45 wt.%, from 15 to 43 wt.% or from 20 to 40 wt.% of at least one poly(aryl ether sulfone) (PAES),
   based on the total weight of the polymeric component, and
- from 0 to 30 wt.%, from 0.1 to 28 wt.% or from 0.5 to 25 wt.% of at least one additive selected from the group consisting of fillers, colorants, lubricants, plasticizers, flame retardant, nucleating agent and stabilizers, based on the total weight of the part material.

### Poly(aryl ether ketone) (PAEK)

As used herein, a "poly(aryl ether ketone) (PAEK)" denotes any polymer comprising more than 50 mol.% of recurring units (R_{PAEK}) comprising a Ar'-C(=O)-Ar* group, where Ar' and Ar*, equal to or different from each other, are aromatic groups, the mol.% being based on the total number of moles in the polymer. The recurring units (R_{PAEK}) are selected from the group consisting of units of formulae (J-A) to (J-D) below: 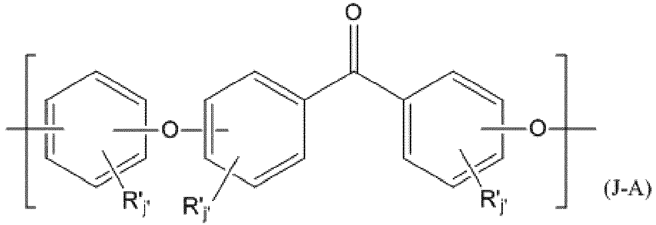 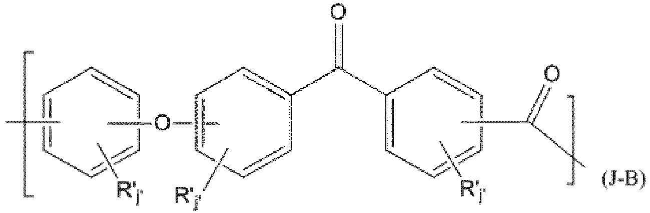 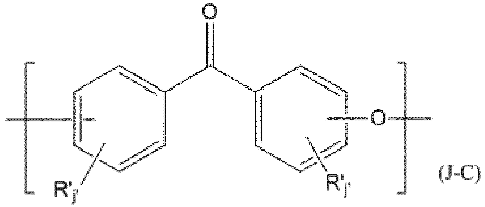 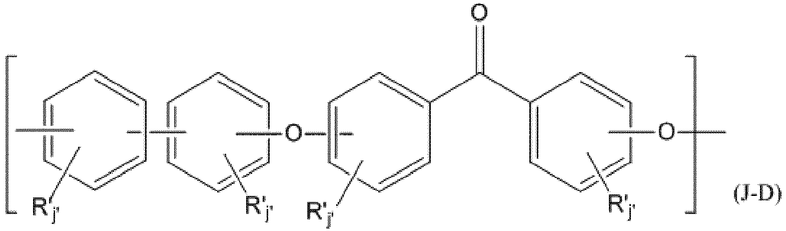 where
- R', at each location, is independently selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium; and
- j', for each R', is independently zero or an integer ranging from 1 to 4.

Each phenylene moiety of the recurring unit (R_{PAEK}) may, independently from one another, have a 1,2-, a 1,3- or a 1,4-linkage to the other phenylene moieties. According to an embodiment, each phenylene moiety of the recurring unit (R_{PAEK}), independently from one another, has a 1,3- or a 1,4-linkage to the other phenylene moieties. According to another embodiment yet, each phenylene moiety of the recurring unit (R_{PAEK}) has a 1,4-linkage to the other phenylene moieties.

According to an embodiment, j' is zero for each R'. In other words, according to this embodiment, the recurring units (R_{PAEK}) are selected from the group consisting of units of formulae (J'-A) to (J'-D):

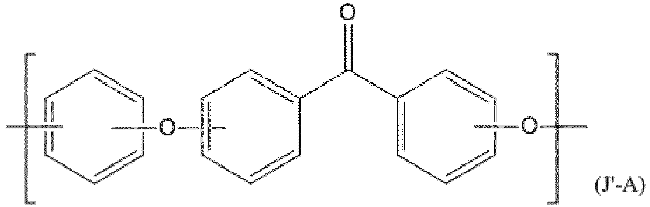

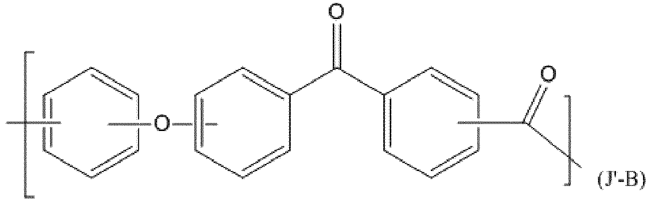

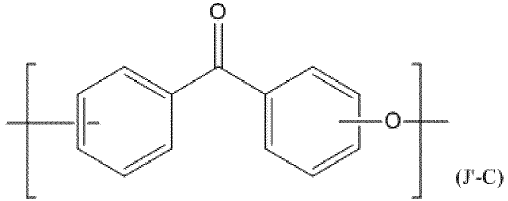

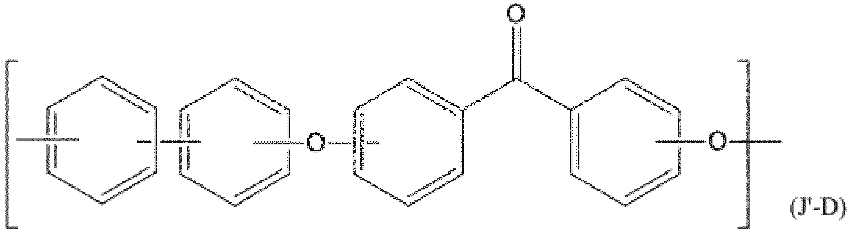

According to an embodiment of the present invention, at least 60 mol. %, at least 70 mol. %, at least 80 mol. %, at least 90 mol. %, at least 95 mol. %, at least 99 mol. % or all of the recurring units in the PAEK are recurring units (R_{PAEK}) selected from the group consisting of units of formulae (J-A) to (J-D) or selected from the group consisting of units of formulae (J'-A) to (J'-D).

In some embodiments, the PAEK is a poly(ether ether ketone) (PEEK). As used herein, a "poly(ether ether ketone) (PEEK)" denotes any polymer of which more than 50 mol.% of the recurring units (R_{PAEK}) are recurring units of formula (J"-A), the mol.% being based on the total number of moles in the polymer:

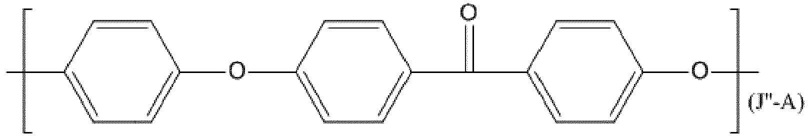

According to an embodiment, at least 60 mol.%, at least 70 mol.%, at least 80 mol.%, at least 90 mol.%, at least 95 mol.%, at least 99 mol.%, or 100 mol.% of the recurring units (R_{PAEK}) are recurring units (J"-A).

In another embodiment, the PAEK is a poly(ether ketone ketone) (PEKK). As used herein, a "poly(ether ketone ketone) (PEKK)" denotes any polymer of which more than 50 mol.% of the recurring units (R_{PAEK}) are a combination of recurring units of formula (J"-B) and formula (J"'-B), the mol.% being based on the total number of moles in the polymer:

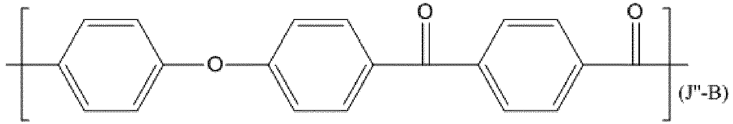

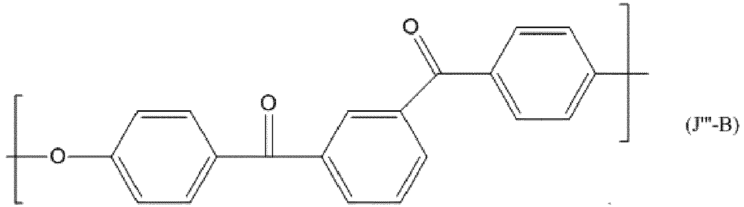

According to an embodiment, at least 60 mol.%, at least 70 mol.%, at least 80 mol.%, at least 90 mol.%, at least 95 mol.%, at least 99 mol.%, or 100 mol.% of the recurring units (R_{PAEK}) are a combination of recurring units (J"-B) and (J"'-B).

In yet another embodiment, the PAEK is a poly(ether ketone) (PEK). As used herein, a "poly(ether ketone) (PEK)" denotes any polymer of which more than 50 mol.% of the recurring units (R_{PAEK}) are recurring units of formula (J"-C), the mol.% being based on the total number of moles in the polymer:

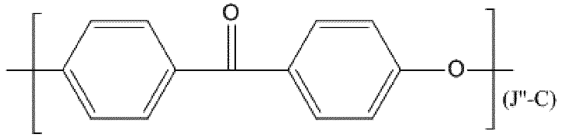

According to an embodiment, at least 60 mol.%, at least 70 mol.%, at least 80 mol.%, at least 90 mol.%, at least 95 mol.%, at least 99 mol.%, or 100 mol.% of the recurring units (R_{PAEK}) are recurring units (J"-C).

According to a preferred embodiment, the PAEK is PEEK. PEEK is commercially available as KetaSpire® PEEK from Solvay Specialty Polymers USA, LLC.

PEEK can be prepared by any method known in the art. It can for example result from the condensation of 4,4'-difluorobenzophenone and hydroquinone in presence of a base. The reactor of monomer units takes place through a nucleophilic aromatic substitution. The molecular weight (for example the weight average molecular weight Mw) can be adjusting the monomers molar ratio and measuring the yield of polymerisation (e.g. measure of the torque of the impeller that stirs the reaction mixture).

According to the present invention, the part material comprises from 55 to 95 wt.% of at least one poly(aryl ether ketone) (PAEK) having a weight average molecular weight (Mw) ranging from 82,000 to 150,000 g/mol, for example from 85,000 to 140,000 g/mol (as determined by gel permeation chromatography (GPC) using phenol and trichlorobenzene (1:1) at 160°C, with polystyrene standards), for example from 55 to 95 wt.% of poly(ether ether ketone) (PEEK) having such Mw.

According to one embodiment, the part material comprises from 55 to 90 wt.%, from 57 to 85 wt.%, from 60 to 80 wt.%, of at least one poly(aryl ether ketone) (PAEK) having a weight average molecular weight (Mw) ranging from 75,000 to 150,000 g/mol, for example from 82,000 to 140,000 g/mol or from 85,000 to 130,000 g/mol, (as determined by gel permeation chromatography (GPC) using phenol and trichlorobenzene (1:1) at 160°C, with polystyrene standards), for example of poly(ether ether ketone) (PEEK) having such Mw, based on the total weight of the polymeric component of the part material.

According to the present invention, the weight average molecular weight Mw of the PAEK is from 75,000 to 150,000 g/mol, for example from 82,000 to 140,000 g/mol or from 85,000 to 140,000 g/mol.

The weight average molecular weight (Mw) of PAEK, for example PEEK, can be determined by gel permeation chromatography (GPC) using phenol and trichlorobenzene (1:1) at 160°C (2x PL Gel mixed B, 10m, 300 x 7.5 mm using a Polymer Laboratories PL-220 unit; flow rate: 1.0 mL/min; injection volume: 200 µL of a 0.2w/v% sample solution), with polystyrene standards.

More precisely, the weight average molecular weight (Mw) can be measured by gel permeation chromatography (GPC). According to the method used in the experimental part, samples were dissolved in a 1:1 mixture of phenol and 1,2,4-trichlorobenzene at 190°C temperature. Samples were then passed through 2x PL Gel mixed B, 10m, 300 x 7.5 mm using a Polymer Laboratories PL-220 unit maintained at 160°C equipped with a differential refractive index detector and calibrated with 12 narrow molecular weight polystyrene standards (Peak molecular weight range: 1,000 - 1,000,000). A flow rate of 1.0 mL/min and injection volume of 200 µL of a 0.2w/v% sample solution was selected. The weight average molecular weight (Mw) was reported.

### Poly(aryl ether sulfone) (PAES)

For the purpose of the present invention, a "poly(aryl ether sulfone) (PAES)" denotes any polymer of which at least 50 mol. % of the recurring units are recurring units (R_{PAES}) of formula (K), the mol. % being based on the total number of moles in the polymer: 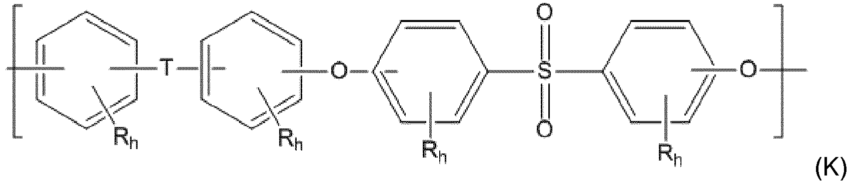 where
- R, at each location, is independently selected from a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium;
- h, for each R, is independently zero or an integer ranging from 1 to 4; and
- T is selected from the group consisting of a bond and a group -C(Rj)(Rk)-, where Rj and Rk, equal to or different from each other, are selected from a hydrogen, a halogen, an alkyl, an alkenyl, an alkynyl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium.

According to an embodiment, Rj and Rk are methyl groups.

According to an embodiment, h is zero for each R. In other words, according to this embodiment, the recurring units (R_{PAEs}) are units of formula (K'):

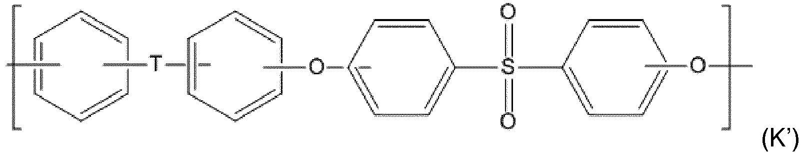

According to an embodiment of the present invention, at least 60 mol. %, at least 70 mol. %, at least 80 mol. %, at least 90 mol. %, at least 95 mol. %, at least 99 mol. % or all of the recurring units in the PAES are recurring units (R_{PAES}) of formula (K) or formula (K').

According to an embodiment, the poly(aryl ether sulfone) (PAES) is a poly(biphenyl ether sulfone) (PPSU).

A poly(biphenyl ether sulfone) polymer is a polyarylene ether sulfone which comprises a biphenyl moiety. Poly(biphenyl ether sulfone) is also known as polyphenyl sulfone (PPSU) and for example results from the condensation of 4,4'-dihydroxybiphenyl (biphenol) and 4,4'-dichlorodiphenyl sulfone.

For the purpose of the present invention, a poly(biphenyl ether sulfone) (PPSU) denotes any polymer of which more than 50 mol.% of the recurring units are recurring units (R_{PPSU}) of formula (L): 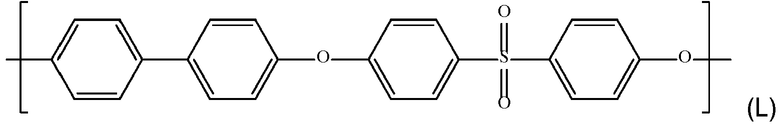 (the mol. % being based on the total number of moles in the polymer).

The PPSU polymer of the present invention can therefore be a homopolymer or a copolymer. If it is a copolymer, it can be a random, alternate or block copolymer.

According to an embodiment of the present invention, at least 60 mol. %, at least 70 mol. %, at least 80 mol. %, at least 90 mol. %, at least 95 mol. %, at least 99 mol. % or all of the recurring units in the PPSU are recurring units (R_{PPSU}) of formula (L).

When the poly(biphenyl ether sulfone) (PPSU) is a copolymer, it can be made of recurring units (R_{*PPSU}), different from recurring units (R_{PPSU}), such as recurring units of formula (M), (N) and/or (O):

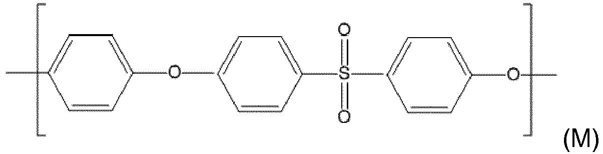

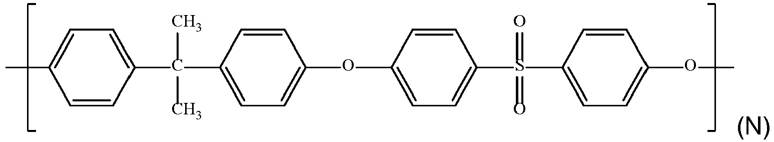

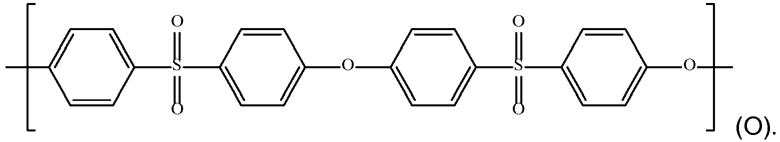

The poly(biphenyl ether sulfone) (PPSU) can also be a blend of a PPSU homopolymer and at least one PPSU copolymer as described above.

The poly(biphenyl ether sulfone) (PPSU) can be prepared by any method known in the art. It can for example result from the condensation of 4,4'-dihydroxybiphenyl (biphenol) and 4,4'-dichlorodiphenyl sulfone. The reaction of monomer units takes place through nucleophilic aromatic substitution with the elimination of one unit of hydrogen halide as leaving group. It is to be noted however that the structure of the resulting poly(biphenyl ether sulfone) does not depend on the nature of the leaving group.

PPSU is commercially available as Radel® PPSU from Solvay Specialty Polymers USA, L.L.C.

According to the present invention, the part material comprises from 5 to 45 wt.% of at least one poly(aryl ether sulfone) (PAES), for example from 5 to 45 wt.% of at least one poly(biphenyl ether sulfone) (PPSU).

According to one embodiment, the part material comprises from 15 to 43 wt.% or from 20 to 40 wt.%, of at least one poly(biphenyl ether sulfone) (PPSU), based on the total weight of the polymeric component of the part material.

According to the present invention, the weight average molecular weight Mw of the PPSU may be from 30,000 to 80,000 g/mol, for example from 35,000 to 75,000 g/mol or from 40,000 to 70,000 g/mol.

The weight average molecular weight (Mw) of PPSU can be determined by gel permeation chromatography (GPC) using methylene chloride as a mobile phase, with polystyrene standards.

According to an embodiment, the poly(aryl ether sulfone) (PAES) is a polysulfone (PSU).

For the purpose of the present invention, a polysulfone (PSU) denotes any polymer of which more at least 50 mol. % of the recurring units are recurring units (R_{PSU}) of formula (K'-C): 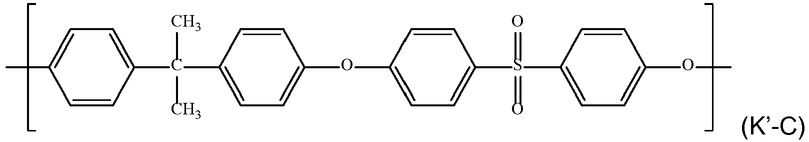 (the mol. % being based on the total number of moles in the polymer).

The PSU polymer of the present invention can therefore be a homopolymer or a copolymer. If it is a copolymer, it can be a random, alternate or block copolymer.

According to an embodiment of the present invention, at least 60 mol. %, at least 70 mol. %, at least 80 mol. %, at least 90 mol. %, at least 95 mol. %, at least 99 mol. % or all of the recurring units in the PSU are recurring units (R_{PSU}) of formula (L).

When the poly(biphenyl ether sulfone) (PSU) is a copolymer, it can be made of recurring units (R*_{PSU}), different from recurring units (R_{PSU}), such as recurring units of formula (L), (M) and/or (O) above described.

PSU is available as Udel® PSU from Solvay Specialty Polymers USA, L.L.C.

According to the present invention, the part material comprises from 5 to 45 wt.% of a poly(aryl ether sulfone) (PAES), for example from 5 to 45 wt.% of a polysulfone (PSU).

According to one embodiment, the part material comprises from 15 to 43 wt.% or from 20 to 40 wt.%, of polysulfone (PSU), based on the total weight of the polymeric component of the part material.

According to the present invention, the weight average molecular weight Mw of the PSU may be from 30,000 to 80,000 g/mol, for example from 35,000 to 75,000 g/mol or from 40,000 to 70,000 g/mol.

The weight average molecular weight (Mw) of PAES, for example PPSU and PSU, can be determined by gel permeation chromatography (GPC) using methylene chloride as a mobile phase (2x 5µ mixed D columns with guard column from Agilent Technologies ; flow rate: 1.5 mL/min; injection volume: 20 µL of a 0.2w/v% sample solution), with polystyrene standards.

More precisely, the weight average molecular weight (Mw) can be measured by gel permeation chromatography (GPC), using methylene chloride as the mobile phase. In the experimental part, the following method was used: two 5µ mixed D columns with guard column from Agilent Technologies were used for separation. An ultraviolet detector of 254nm was used to obtain the chromatogram. A flow rate of 1.5ml/min and injection volume of 20 µL of a 0.2w/v% solution in mobile phase was selected. Calibration was performed with 12 narrow molecular weight polystyrene standards (Peak molecular weight range: 371,000 to 580 g/mol). The weight average molecular weight (Mw) was reported.

According to an embodiment of the present invention, the part material comprises:
- a polymeric component comprising:
   a) from 55 to 95 wt.%, from 57 to 85 wt.% or from 60 to 80 wt.% of at least one PEEK, and
   b) from 5 to 45 wt.%, from 15 to 43 wt.% or from 20 to 40 wt.% of at least one PPSU,
   based on the total weight of the polymeric component, and
- from 0 to 30 wt.%, from 0.5 to 28 wt.% or from 1 to 25 wt.% of at least one additive selected from the group consisting of fillers, colorants, lubricants, plasticizers, flame retardants, nucleating agent and stabilizers, based on the total weight of the part material.

According to an embodiment of the present invention, the part material comprises:
- a polymeric component comprising:
   a) from 55 to 95 wt.%, from 57 to 85 wt.% or from 60 to 80 wt.% of at least one PEEK, and
   b) from 5 to 45 wt.%, from 15 to 43 wt.% or from 20 to 40 wt.% of at least one PSU,
   based on the total weight of the polymeric component, and
- from 0 to 30 wt.%, from 0.5 to 28 wt.% or from 1 to 25 wt.% of at least one additive selected from the group consisting of fillers, colorants, lubricants, plasticizers, flame retardants, nucleating agents and stabilizers, based on the total weight of the part material.

The applicant has found that such a part material advantageously presents, when used to manufacture 3D objects, a mechanical property profile (i.e. tensile strength, tensile elongation and impact resistance) comparable or even better than injection molded parts.

The part material of the present invention can be made by methods well known to the person of ordinary skill in the art. For example, such methods include, but are not limited to, melt-mixing processes. Melt-mixing processes are typically carried out by heating the polymer components above the melting temperature of the thermoplastic polymers thereby forming a melt of the thermoplastic polymers. In some embodiments, the processing temperature ranges from about 280-450°C, preferably from about 290-440°C, from about 300-430°C or from about 310-420°C. Suitable melt-mixing apparatus are, for example, kneaders, Banbury mixers, single-screw extruders, and twin-screw extruders. Preferably, use is made of an extruder fitted with means for dosing all the desired components to the extruder, either to the extruder's throat or to the melt. In the process for the preparation of the part material, the components of the part material, i.e. PAES, PAEK and optionally additives, are fed to the melt-mixing apparatus and melt-mixed in that apparatus. The components may be fed simultaneously as a powder mixture or granule mixer, also known as dry-blend, or may be fed separately.

The order of combining the components during melt-mixing is not particularly limited. In one embodiment, the component can be mixed in a single batch, such that the desired amounts of each component are added together and subsequently mixed. In other embodiments, a first sub-set of components can be initially mixed together and one or more of the remaining components can be added to the mixture for further mixing. For clarity, the total desired amount of each component does not have to be mixed as a single quantity. For example, for one or more of the components, a partial quantity can be initially added and mixed and, subsequently, some or all of the remainder can be added and mixed.

### Filament material

The present invention also relates to a filament material for 3D printing comprising a polymeric component comprising:
a) from 55 to 95 wt.% of at least one poly(aryl ether ketone) (PAEK) having a weight average molecular weight (Mw) ranging from 75,000 to 150,000 g/mol, for example from 82,000 to 140,000 g/mol or from 85,000 to 140,000 g/mol, as determined by gel permeation chromatography (GPC) using phenol and trichlorobenzene (1:1) at 160°C, with polystyrene standards, and
b) from 5 to 45 wt.% of at least one poly(aryl ether sulfone) (PAES), based on the total weight of the polymeric component of the filament material.

According to an embodiment, the present invention relates to a filament material comprising a polymeric component comprising:
a) from 57 to 95 wt.% of at least one poly(aryl ether ketone) (PAEK) having a weight average molecular weight (Mw) ranging from 75,000 to 150,000 g/mol (as determined by gel permeation chromatography (GPC) using phenol and trichlorobenzene (1:1) at 160°C, with polystyrene standards), for example from 60 to 90 wt.% or from 62 to 85 wt.% at the PAEK, and
b) from 5 to 43 wt.% of at least one poly(aryl ether sulfone) (PAES), for example from 10 to 40 wt.% or from 15 to 38 wt.% of the PAES,
based on the total weight of the polymeric component of the filament material.

This filament material is well-suited for use in a method for manufacturing a three-dimensional object.All of the embodiments described above with respect to the part material do apply equally to the filament material.

As an example, the filament material of the invention may include other components. For example the filament material may comprise at least one additive, notably at least one additive selected from the group consisting of fillers, colorants, lubricants, plasticizers, stabilizers, flame retardants, nucleating agents and combinations thereof.

The filament may have a cylindrical or substantially cylindrical geometry, or may have a non-cylindrical geometry, such as a ribbon filament geometry; further, filament may have a hollow geometry, or may have a core-shell geometry, with the support material of the present invention being used to form either the core or the shell.

When the filament has a cylindrical geometry, its diameter may vary between 0.5 mm and 5 mm, for example between 0.8 and 4 mm or for example between 1 mm and 3.5 mm. The diameter of the filament can be chosen to feed a specific FFF 3D printer. An example of filament diameter used extensively in FFF process is 1.75 mm diameter.

According to an embodiment, the filament has a cylindrical geometry and its diameter varies from 1.5 to 3 mm ± 0.2 mm, from 1.6 to 2.9 mm ± 0.2 mm or from 1.65 to 2.85 mm ± 0.2 mm.

According to an embodiment, the filament has an ovality (also called roundness) of less than 0.1, for example less than 0.08 or less than 0.06. The ovality of the filament is defined as the difference of the major and minor diameters of the filament divided by the average of the two diameters.

The filament of the present invention can be made from the part material by methods including, but not limited to, melt-mixing processes. Melt-mixing processes are typically carried out by heating the polymer components above the melting temperature of the thermoplastic polymers thereby forming a melt of the thermoplastic polymers. In some embodiments, the processing temperature ranges from about 280-450°C, preferably from about 290-440°C, from about 300-430°C or from about 310-420°C.

The process for the preparation of the filament can be carried out in a melt-mixing apparatus, for which any melt-mixing apparatus known to the one skilled in the art of preparing polymer compositions by melt mixing can be used. Suitable melt-mixing apparatus are, for example, kneaders, Banbury mixers, single-screw extruders, and twin-screw extruders. Preferably, use is made of an extruder fitted with means for dosing all the desired components to the extruder, either to the extruder's throat or to the melt. In the process for the preparation of the filament, the components of the part material, i.e. PAES, PAEK and optionally additives, are fed to the melt-mixing apparatus and melt-mixed in that apparatus. The components may be fed simultaneously as a powder mixture or granule mixer, also known as dry-blend, or may be fed separately.

The order of combining the components during melt-mixing is not particularly limited. In one embodiment, the component can be mixed in a single batch, such that the desired amounts of each component are added together and subsequently mixed. In other embodiments, a first sub-set of components can be initially mixed together and one or more of the remaining components can be added to the mixture for further mixing. For clarity, the total desired amount of each component does not have to be mixed as a single quantity. For example, for one or more of the components, a partial quantity can be initially added and mixed and, subsequently, some or all of the remainder can be added and mixed.

The method for manufacturing the filaments also comprise a step of extrusion, for example with a die. For this purpose, any standard molding technique can be used; standard techniques including shaping the polymer compositions in a molten/softened form can be advantageously applied, and include notably compression molding, extrusion molding, injection molding, transfer molding and the like. Dies may be used to shape the articles, for example a die having a circular orifice if the article is a filament of cylindrical geometry.

The method may comprise if needed several successive steps of melt-mixing or extrusion under different conditions.

The process itself, or each step of the process if relevant, may also comprise a step consisting in a cooling of the molten mixture.

### Support material

The method of the present invention may also employ another polymeric component to support the 3D object under construction. This polymeric component, similar or distinct from the part material used to build a 3D object, is hereby called support material. Support material may be required during 3D printing to provide vertical and/or lateral support in the higher operating conditions required for the high-temperature part materials (e.g. PEEK requiring a processing temperature around 360-400°C).

The support material, possibly used in the context of the present method, advantageously possesses a high melting temperature (i.e. above 260°C), in order to resist high temperature applications. The support material may also possess a water absorption behaviour or a solubility in water at a temperature lower than 110°C, in order sufficiently swell or deform upon exposure to moisture.

According to an embodiment of the present invention, the method for manufacturing a three-dimensional object with an additive manufacturing system further comprises the steps of:
- providing a support material,
- printing layers of a support structure from the support material, and
- removing at least a portion of the support structure from the three-dimensional object.

A variety of polymeric components can be used as a support material. Notably, support material can comprise polyamides or copolyamides, such as for example the ones described in co-pending US provisional application # 62/316,835 and co-pending US provisional application # 62/419,035.

### Applications

The present invention also relates to the use of a part material comprising a polymeric component comprising:
a) from 55 to 95 wt.% of at least one poly(aryl ether ketone) (PAEK) having a weight average molecular weight (Mw) ranging from 75,000 to 150,000 g/mol, for example from 82,000 to 140,000 g/mol or from 85,000 to 140,000 g/mol, as determined by gel permeation chromatography (GPC) using phenol and trichlorobenzene (1:1) at 160°C, with polystyrene standards, and
b) from 5 to 45 wt.% of at least one poly(aryl ether sulfone) (PAES), based on the total weight of the polymeric component of the part material, for the manufacture of three-dimensional objects.

The present invention also relates to the use of a filament material comprising a polymeric component comprising:
a) from 55 to 95 wt.% of at least one poly(aryl ether ketone) (PAEK) having a weight average molecular weight (Mw) ranging from 75,000 to 150,000 g/mol, for example from 82,000 to 140,000 g/mol or from 85,000 to 140,000 g/mol, as determined by gel permeation chromatography (GPC) using phenol and trichlorobenzene (1:1) at 160°C, with polystyrene standards, and
b) from 5 to 45 wt.% of at least one poly(aryl ether sulfone) (PAES), based on the total weight of the polymeric component of the part material, for the manufacture of three-dimensional objects.

All of the embodiments described above with respect to the part material do apply equally to the use of the part material or the use of the filament material.

According to an embodiment of the invention, the PAEK is a poly(ether ether ketone) (PEEK) having a weight average molecular weight (Mw) ranging from 75,000 to 150,000 g/mol, for example from 82,000 to 140,000 g/mol or from 85,000 to 140,000 g/mol, as determined by gel permeation chromatography (GPC) using phenol and trichlorobenzene (1:1) at 160°C, with polystyrene standards, and the PAES is a poly(biphenyl ether sulfone) (PPSU) and/or a polysulfone (PSU).

The present invention also relates to the use of a part material comprising a polymeric component comprising:
a) from 55 to 95 wt.% of at least one poly(aryl ether ketone) (PAEK) having a weight average molecular weight (Mw) ranging from 75,000 to 150,000 g/mol, for example from 82,000 to 140,000 g/mol or from 85,000 to 140,000 g/mol, as determined by gel permeation chromatography (GPC) using phenol and trichlorobenzene (1:1) at 160°C, with polystyrene standards, and
b) from 5 to 45 wt.% of at least one poly(aryl ether sulfone) (PAES), based on the total weight of the polymeric component of the part material, for the manufacture of a filament for use in the manufacture of three-dimensional objects.

The present invention also relates to 3D objects or 3D articles obtainable, at least in part, from the method of manufacture of the present invention, using the part material herein described. These 3D objects or 3D articles present a density comparable to injection molded objects or articles. They also present comparable or improved mechanical properties, notably impact strength (or impact resistance, for example notched impact resistance), stiffness (measured as the modulus of elasticity), tensile strength or elongation.

The 3D objects or articles obtainable by such method of manufacture can be used in a variety of final applications. Mention can be made in particular of implantable device, dental prostheses, brackets and complex shaped parts in the aerospace industry and under-the-hood parts in the automotive industry.

### EXAMPLES

The invention will be now described in more detail with reference to the following examples, whose purpose is merely illustrative and not intended to limit the scope of the invention.

### Starting Materials

The following materials were used to prepare the Examples:
PEEK #1: a poly(ether ether ketone) (PEEK) having a Mw of 102,000 g/mol, prepared according to the following process:
   In a 500 ml 4-neck reaction flask fitted with a stirrer, a N2 inlet tube, a Claisen adapter with a thermocouple plunging in the reaction medium, and a Dean-Stark trap with a condenser and a dry ice trap were introduced 128 g of diphenyl sulfone, 28.6 g of p-hydroquinone , and 57.2 g of 4,4'-difluorobenzophenone.
   The reaction mixture was heated slowly to 150°C. At 150°C, a mixture of 28.43 g of dry Na₂CO₃ and 0.18 g of dry K₂CO₃ was added via a powder dispenser to the reaction mixture over 30 minutes. At the end of the addition, the reaction mixture was heated to 320°C at 1°C/minute. After 15 to 30 minutes, when the polymer had the expected Mw, the reaction was stopped by the introduction of 6.82 g of 4,4'-difluorobenzophenone to the reaction mixture while keeping a nitrogen purge on the reactor. After 5 minutes, 0.44 g of lithium chloride were added to the reaction mixture. 10 minutes later, another 2.27 g of 4,4'-difluorobenzophenone were added to the reactor and the reaction mixture was kept at temperature for 15 minutes. The reactor content was then cooled.
   The solid was broken up and ground. The polymer was recovered by filtration of the salts, washing and drying. The GPC analysis showed a number average molecular weight Mw=102,000 g/mol.
PEEK #2: a poly(ether ether ketone) (PEEK) having a Mw of 71,000 g/mol, prepared according to the same process than PEEK #1, except that the reaction was stopped earlier.
PPSU #1: a poly(biphenyl ether sulfone) (PPSU) with a Mw of 51,500 g/mol, prepared according to the following process:
   The synthesis of the PPSU was achieved by the reaction in a 1L flask of 83.8 g of 4,4'-biphenol,131.17 g of 4,4'-dichlorodiphenyl sulfone dissolved in a mixture of 400 g of sulfolane with the addition of 66.5g of dry K₂CO₃. The reaction mixture was heated up to 210 °C and maintained at this temperature until the polymer had the expected Mw. An excess of methyl chloride was then added to the reaction.
   The reaction mixture was heated up to 210 °C and maintained at this temperature , until the polymer had the expected Mw. An excess of methyl chloride was then added to the reaction.
   The reaction mixture was diluted with 600 g of MCB. The poly(biphenyl ether sulfone) was recovered by filtration of the salts, washing and drying.
   The GPC analysis showed a number average molecular weight (Mw) of 51,500 g/mol.
PPSU #2: a poly(biphenyl ether sulfone) (PPSU) with a Mw of 45,900 g/mol, prepared according to the same process than PPSU #1, except that the reaction was stopped earlier.
PSU #1: a polysulfone (PSU) with a Mw of 67,000 g/mol prepared according to the following process:
   The synthesis of the PSU was achieved by the reaction in a 1L flask of 114.14 g (0.5 mol) of bisphenol A dissolved in a mixture of 247 g of dimethylsulfoxide (DMSO) and 319.6 g of monochlorobenzene (MCB) with an aqueous solution of 79.38 g of sodium hydroxide at 50.34%, followed by distillation of the water to generate a solution of bisphenol A sodium salt free from water by heating the solution up to 140 °C. In the reactor was then introduced a solution of 143.59 g (0.5 mol) of 4,4'-dichlorodiphenyl sulfone in 143 g of MCB. The reaction mixture was heated up to 165 °C and maintained at this temperature during 15 to 30 min, until the polymer had the expected Mw. An excess of methyl chloride was then added to the reaction.
   The reaction mixture was diluted with 400 mL of MCB and then cooled to 120 °C. 30 g of methyl chloride was added over 30 min. The polysulfone was recovered by filtration of the salts, washing and drying. The GPC analysis showed a number average molecular weight (Mw) of 67,000 g/mol.

### Blend Compounding

Each formulation was melt compounded using a 26 mm diameter Coperion® ZSK-26 co-rotating partially intermeshing twin screw extruder having an L/D ratio of 48:1. The barrel sections 2 through 12 and the die were heated to set point temperatures as follows:
Barrels 2-6: 350 °C
Barrels 7-12: 360 °C
Die: 360 °C
In each case, the resin blends were fed at barrel section 1 using a gravimetric feeder at throughput rates in the range 30-35 Ib/hr. The extruder was operated at screw speeds of around 200 RPM. Vacuum was applied at barrel zone 10 with a vacuum level of about 27 inches of mercury. A single-hole die was used for all the compounds to give a filament approximately 2.6 to 2.7 mm in diameter and the polymer filament exiting the die was cooled in water and fed to the pelletizer to generate pellets approximately 2.7 mm in length. Pellets were dried at 140°C for 16 h under vacuum prior to filament processing (FFF, according to the invention) or injection molding (IM, comparative examples).

### Filament Preparation

Filament of diameter of 1.75 mm was prepared for each blend and neat resin composition using a Brabender® Intelli-Torque Plasti-Corde® Torque Rheometer extruder equipped with a 0.75" 32 L/D general purpose single screw, a filament head adapter, a 2.5-mm nozzle and ESI-Extrusion Services downstream equipment comprising a cooling tank, a belt puller, and a Dual Station Coiler. A Beta LaserMike® DataPro 1000 was used to monitor filament dimensions. The melt strand was cooled with air. The Brabender® zone set point temperatures were as follows: zone 1, 350°C; zone 2, 340°C; zones 3 and 4, 330°C. The Brabender® speed ranged from 30 to 50 rpm and the puller speed from 23 to 37 fpm.

### FFF bars (according to the invention)

Test bars (i.e. ASTM D638Type V bars) were printed from filament of 1.75 mm in diameter on an Indmatec® HPP 155 3D printer equipped with a 0.6 mm diameter nozzle. Bars were oriented in the XY direction on the build platform during printing. Test bars were printed with a 10 mm-wide brim and three perimeters. The tool path was a cross-hatch pattern with a 45° angle with respect to the long axis of the part. The build plate temperature for all bars was 100°C. The nozzle and extruder temperature was 405°C for all FFF examples except 3a, where the temperature was 385°C The speed of the nozzle was varied from 8 to 18 mm/s. The first layer height in each case was 0.3 mm, with subsequent layers deposited at 0.1 mm height and 100% fill density.
FFF bars for the inventive composition 9a were printed using the Hydra 430 from Hyrel, LLC., equipped with a 0.5 mm diameter nozzle. Bars were oriented in the XY direction on the build platform during printing. Test bars were printed with a 15 mm-wide brim and two perimeters. The tool path was a cross-hatch pattern with a 45° angle with respect to the long axis of the part, layer height was 0.2 mm and nozzle speed was 20 mm/s. The build plate temperature for all bars was 130°C. The nozzle and extruder temperature was 425°C.

### IM bars (comparative)

ASTM D638 Type V5 bars and ASTM D256 impact bars were also obtained by injection molding. Examples 1b and 2b were processed in a mold regulated at 216°C and 204°C, respectively. A mold temperature of 177°C was employed for examples 3b, 4b and 6b, a temperature of 182°C for example 7b and a temperature of 213°C for 8b.

### Test methods

### * Weight average molecular weight (Mw) of the polymers

PEAK: The molecular weight was measured by gel permeation chromatography (GPC). Samples were dissolved in a 1:1 mixture of phenol and 1,2,4-trichlorobenzene at 190°C temperature. Samples were then passed through 2x PL Gel mixed B, 10m, 300 x 7.5 mm using a Polymer Laboratories PL-220 unit maintained at 160°C equipped with a differential refractive index detector and calibrated with 12 narrow molecular weight polystyrene standards (Peak molecular weight range: 1,000 - 1,000,000). A flow rate of 1.0ml/min and injection volume of 200 µL of a 0.2w/v% sample solution was selected. The weight average molecular weight (Mw) was reported.

PAES: The molecular weight was measured by gel permeation chromatography (GPC), using methylene chloride as a mobile phase. Two 5µ mixed D columns with guard column from Agilent Technologies were used for separation. An ultraviolet detector of 254nm was used to obtain the chromatogram. A flow rate of 1.5 ml/min and injection volume of 20 µL of a 0.2 w/v% solution in mobile phase was selected. Calibration was performed with 12 narrow molecular weight polystyrene standards (Peak molecular weight range: 371,000 to 580 g/mol). The weight average molecular weight (Mw) was reported.

### * Impact strength

Notched impact strength was determined according to the ASTM D256 method using a 2-ftlb hammer.

### *Tensile strength

Tensile strength and modulus were determined according to the ASTM D638 method with Type V bars.

The components and their respective amounts in the test bars (according to the present invention or comparative) and the mechanical properties of the same are reported in Tables 1-3 below (5 test bars/mean value).

**Table 1**

| | **1a** | **1b** | **2a** | **2b** | **3a** | **3b** |
|---|---|---|---|---|---|---|
| C: comparative I: according to the invention | C | C | C | C | C | C |
| PEEK #1 | | | 100 | 100 | | |
| PEEK #2 | 100 | 100 | | | | |
| PPSU #2 | | | | | 100 | 100 |
| **Process** | FFF | IM | FFF | IM | FFF | IM |
| **Density** | 1.26 | 1.30 | 1.13 | 1.29 | 1.20 | 1.30 |
| **Modulus of Elasticity (ksi)** | 489 | 519 | 438 | 473 | 313 | 331 |
| **Nominal Tensile Strain at Break (%)** | 4.4 | 30 | 45 | 34 | 13 | 29 |
| **Tensile Elongation at Yield (%)** | 3.5 | 5.3 | 4.1 | 5.2 | 7.3 | 6.4 |
| **Tensile Strength at Yield (psi)** | 11006 | 12800 | 9900 | 12200 | 9650 | 9970 |
| **Notched Impact (ft-lb/in)** | 1.58 | 0.945 | *NR* | 2.0 | 3.25 | 10.8 |
| **Testing Speed (in/min)** | 0.05 | 0.05 | 0.05 | 0.05 | 0.05 | 0.05 |

| | | | | | | |
|---|---|---|---|---|---|---|
| NR: non relevant - complete interlayer delamination of the 5 test bars | | | | | | |

The test bars of examples 1a, 2a and 3a obtained by FFF does not exhibit a sufficient density compared to part material obtained by injection molding, which means that the composition of the part material used in these examples is therefore not adapted to the requirements of Fused Filament Fabrication according to the present invention.

**Table 2**

| | **4a** | **4b** | **5a** | **6a** | **6b** |
|---|---|---|---|---|---|
| C: comparative I: according to the invention | C | C | C | I | C |
| PEEK #1 | | | 50 | 63 | 63 |
| PEEK #2 | 63 | 63 | | | |
| PPSU #1 | | | 50 | | |
| PPSU #2 | 37 | 37 | | | |
| PSU #1 | | | | 37 | 37 |
| Process | FFF | IM | FFF | FFF | IM |
| Density | | | - | 1.26 | 1.27 |
| Modulus of Elasticity (ksi) | 452 | 444 | Poor printing bars | 379 | 403 |
| Nominal Tensile Strain at Break (%) | NA | 29 | | 71 | 72 |
| Tensile Elongation at Yield (%) | 6.8 | 6.5 | | 5.0 | 5.2 |
| Tensile Strength at Yield (psi) | 11600 | 12800 | | 9470 | 10400 |
| Notched Impact (ft-lb/in) | 0.62 | 1.3 | | 1.50 | 1.47 |
| Testing Speed (in/min) | 0.05 | 0.05 | | 0.05 | 0.05 |

The test bars of example 6a obtained by FFF exhibit a good surface aspect (layers are difficult to distinguish one from the others) and a density comparable to part material obtained by injection molding (example 6b). Their impact resistance is comparable to injection molded part. The composition of the part material used in example 6a is therefore well-suited to the requirements of Fused Filament Fabrication according to the present invention.

**Table 3**

| | **7a** | **7b** | **8a** | **8b** |
|---|---|---|---|---|
| C: comparative I: according to the invention | I | C | I | C |
| PEEK #1 | 63 | 63 | 63 | 63 |
| PPSU #1 | | | 37 | 37 |
| PPSU #2 | 37 | 37 | | |
| Zinc Stearate | | | 0.1% | 0.1% |
| Zinc Oxide | | | 0.1% | 0.1% |
| Process | FFF | IM | FFF | IM |
| Density | 1.29 | 1.29 | 1.29 | 1.30 |
| Modulus of Elasticity (ksi) | 363 | 407 | 386 | 406 |
| Nominal Tensile Strain at Break (%) | 28 | 42 | 58 | 45 |
| Tensile Elongation at Yield (%) | 5.9 | 5.7 | 5.7 | 6.4 |
| Tensile Strength at Yield (psi) | 10000 | 11900 | 10000 | 12200 |
| Notched Impact (ft-lb/in) | 4.25 | 1.49 | 10.7 | 1.73 |
| Testing Speed (in/min) | 0.05 | 0.05 | 0.05 | 0.05 |

The test bars of examples 7a and 8a obtained by FFF exhibit a density comparable to part material obtained by injection molding (examples 7b and 8b). Their impact resistance is higher compared to injection molded part. The composition of the part material used in these examples is therefore particularly well-suited to the requirements of Fused Filament Fabrication according to the present invention.

**Table 4**

| | **9a** | **9b** |
|---|---|---|
| C: comparative I: according to the invention | I | C |
| PEEK #1 | 75 | 75 |
| PSU #1 | 25 | 25 |
| Zinc Stearate | | |
| Zinc Oxide | | |
| Process | FFF | IM |
| Density | 1.27 | 1.28 |
| Modulus of Elasticity (ksi) | 398 | 457 |
| Nominal Tensile Strain at Break (%) | 50 | 29 |
| Tensile Elongation at Yield (%) | 5.0 | 5.2 |
| Tensile Strength at Yield (psi) | 10800 | 11900 |
| Notched Impact (ft-lb/in) | 1.19 | 1.58 |
| Testing Speed (in/min) | 0.05 | 0.05 |

The test bars of example 9a show comparable density to the injection molded bars 9b. The composition 9a shows excellent strain at break and tensile strength.

## Claims

1. A method for manufacturing a three-dimensional (3D) object with an additive manufacturing system, comprising:
- providing a part material in the form of a filament, comprising a polymeric component comprising:
a) from 55 to 95 wt.% of at least one poly(aryl ether ketone) (PAEK) having a weight average molecular weight (Mw) ranging from 75,000 to 150,000 g/mol, as determined by gel permeation chromatography (GPC) using phenol and trichlorobenzene (1:1) at 160°C, with polystyrene standards, and
b) from 5 to 45 wt.% of at least one poly(aryl ether sulfone) (PAES),
based on the total weight of the polymeric component of the part material, and
- printing layers of the three-dimensional object from the part material which comprises extruding the part material.

2. The method of claim 1, wherein the part material also comprises up to 30 wt.%, based on the total weight of the part material, of at least one additive selected from the group consisting of fillers, colorants, lubricants, plasticizers, flame retardants, nucleating agents and stabilizers.

3. The method of claim 1 or 2, wherein the PAEK is a poly(ether ether ketone) (PEEK) having a weight average molecular weight (Mw) ranging from 82,000 to 150,000 g/mol, as determined by gel permeation chromatography (GPC) using ASTM D5296 with polystyrene standards.

4. The method of any one of claims 1-4, wherein the PAES is a poly(biphenyl ether sulfone) (PPSU) and/or a polysulfone (PSU).

5. The method of anyone of claims 1-3, further comprising the steps of:
- providing a support material,
- printing layers of a support structure from the support material, and
- removing at least a portion of the support structure from the three-dimensional object.

6. A filament material comprising a polymeric component comprising:
a) from 57 to 95 wt.% of at least one poly(aryl ether ketone) (PAEK) having a weight average molecular weight (Mw) ranging from 75,000 to 150,000 g/mol (as determined by gel permeation chromatography (GPC) using phenol and trichlorobenzene (1:1) at 160°C, with polystyrene standards), and
b) from 5 to 43 wt.% of at least one poly(aryl ether sulfone) (PAES),
based on the total weight of the polymeric component of the filament material.

7. The filament material of claim 6, wherein the PAEK is a poly(ether ether ketone) (PEEK) having a weight average molecular weight (Mw) ranging from 75,000 to 150,000 g/mol (as determined by gel permeation chromatography (GPC) using phenol and trichlorobenzene (1:1) at 160°C, with polystyrene standards).

8. The filament material of any one of claims 6 to 7, wherein the PAES is a poly(biphenyl ether sulfone) (PPSU) and/or a polysulfone (PSU).

9. The filament material of any one of claim 6 to 8, further comprising from 0.1 to 30 wt.% of an additive selected from the group consisting of fillers, colorants, lubricants, plasticizers, flame retardants, nucleating agents and stabilizers.

10. The filament material of any one of claim 6 to 9, having a cylindrical geometry and a diameter varying from 1.5 to 3 mm ± 0.2 mm, from 1.6 to 2.9 mm ± 0.2 mm or from 1.65 to 2.85 mm ± 0.2 mm.

11. Use of a part material in the form of a filament, comprising a polymeric component comprising:
a) from 55 to 95 wt.% of at least one poly(aryl ether ketone) (PAEK) having a weight average molecular weight (Mw) ranging from 75,000 to 150,000 g/mol (as determined by gel permeation chromatography (GPC) using phenol and trichlorobenzene (1:1) at 160°C, with polystyrene standards), and
b) from 5 to 45 wt.% of at least one poly(aryl ether sulfone) (PAES),
based on the total weight of the polymeric component of the part material, for the manufacture of three-dimensional objects.

12. Use of a part material comprising a polymeric component comprising:
a) from 55 to 95 wt.% of at least one poly(aryl ether ketone) (PAEK) having a weight average molecular weight (Mw) ranging from 75,000 to 150,000 g/mol (as determined by gel permeation chromatography (GPC) using phenol and trichlorobenzene (1:1) at 160°C, with polystyrene standards), and
b) from 5 to 45 wt.% of at least one poly(aryl ether sulfone) (PAES),
based on the total weight of the polymeric component of the part material, for the manufacture of a filament for use in the manufacture of three-dimensional objects.

13. Use of claim 11 or 12, wherein the PAEK is a poly(ether ether ketone) (PEEK) having a weight average molecular weight (Mw) ranging from 75,000 to 150,000 g/mol (as determined by gel permeation chromatography (GPC) using phenol and trichlorobenzene (1:1) at 160°C, with polystyrene standards).

14. Use of any one of claims 11 to 13, wherein the PAES is a poly(biphenyl ether sulfone) (PPSU) and/or a polysulfone (PSU).

15. Use of any one of claims 11 to 14, wherein the part material also comprises up to 30 wt.%, based on the total weight of the part material, of at least one additive selected from the group consisting of fillers, colorants, lubricants, plasticizers, flame retardants, nucleating agents and stabilizers.

## Patentansprüche

1. Verfahren zur Fertigung eines dreidimensionalen (3D) Objekts mit einem additiven Fertigungssystem, umfassend:
- Bereitstellen eines Teilmaterials in Form eines Filaments, umfassend eine polymere Komponente, umfassend:
a) 55 bis 95 Gew.% von mindestens einem Poly(aryl-etherketon) (PAEK) mit einem durchschnittlichen Molekulargewicht (Gewichtsmittel) (Mw) im Bereich von 75.000 bis 150.000 g/mol, bestimmt mittels Gelpermeationschromatographie (GPC) unter Verwendung von Phenol und Trichlorbenzol (1:1) bei 160 °C mit Polystyrolstandards, und
b) 5 bis 45 Gew.% von mindestens einem Poly(aryl-ethersulfon) (PAES),
bezogen auf das Gesamtgewicht der polymeren Komponente des Teilmaterials, und
- Drucken von Schichten des dreidimensionalen Objekts aus dem Teilmaterial, das Extrudieren des Teilmaterials umfasst.

2. Verfahren nach Anspruch 1, wobei das Teilmaterial auch bis zu 30 Gew.%, bezogen auf das Gesamtgewicht des Teilmaterials, von mindestens einem Additiv ausgewählt aus der Gruppe bestehend aus Füllstoffen, Färbungsmitteln, Schmiermitteln, Weichmachern, Flammhemmern, Nukleierungsmitteln und Stabilisatoren umfasst.

3. Verfahren nach Anspruch 1 oder 2, wobei das PAEK ein Poly(etheretherketon) (PEEK) mit einem durchschnittlichen Molekulargewicht (Gewichtsmittel) (Mw) im Bereich von 82.000 bis 150.000 g/mol ist, bestimmt mittels Gelpermeationschromatographie (GPC) unter Verwendung von ASTM D5296 mit Polystyrolstandards.

4. Verfahren nach einem der Ansprüche 1 bis 4, wobei das PAES ein Poly(biphenylethersulfon) (PPSU) und/oder ein Polysulfon (PSU) ist.

5. Verfahren nach einem der Ansprüche 1 bis 3, des Weiteren umfassend die folgenden Schritte:
- Bereitstellen eines Trägermaterials,
- Drucken von Schichten einer Trägerstruktur aus dem Trägermaterial, und
- Entfernen von mindestens einem Anteil der Trägerstruktur von dem dreidimensionalen Objekt.

6. Filamentmaterial, umfassend eine polymere Komponente, welche umfasst:
a) 57 bis 95 Gew.% von mindestens einem Poly(aryl-etherketon) (PAEK) mit einem durchschnittlichen Molekulargewicht (Gewichtsmittel) (Mw) im Bereich von 75.000 bis 150.000 g/mol (bestimmt mittels Gelpermeationschromatographie (GPC) unter Verwendung von Phenol und Trichlorbenzol (1:1) bei 160 °C mit Polystyrolstandards, und
b) 5 bis 43 Gew.% von mindestens einem Poly(aryl-ethersulfon) (PAES),
bezogen auf das Gesamtgewicht der polymeren Komponente des Filamentmaterials.

7. Filamentmaterial nach Anspruch 6, wobei das PAEK ein Poly(etheretherketon) (PEEK) mit einem durchschnittlichen Molekulargewicht (Gewichtsmittel) (Mw) im Bereich von 75.000 bis 150.000 g/mol ist (bestimmt mittels Gelpermeationschromatographie (GPC) unter Verwendung von Phenol und Trichlorbenzol (1:1) bei 160 °C mit Polystyrolstandards).

8. Filamentmaterial nach einem der Ansprüche 6 bis 7, wobei das PAES ein Poly(biphenylethersulfon) (PPSU) und/oder ein Polysulfon (PSU) ist.

9. Filamentmaterial nach einem der Ansprüche 6 bis 8, des Weiteren umfassend 0,1 bis 30 Gew.% eines Additivs ausgewählt aus der Gruppe bestehend aus Füllstoffen, Färbungsmitteln, Schmiermitteln, Weichmachern, Flammhemmern, Nukleierungsmitteln und Stabilisatoren.

10. Filamentmaterial nach einem der Ansprüche 6 bis 9 mit einer zylindrischen Geometrie und einem Durchmesser, der von 1,5 bis 3 mm ± 0,2 mm, von 1,6 bis 2,9 mm ± 0,2 mm oder von 1,65 bis 2,85 mm ± 0,2 mm variiert.

11. Verwendung eines Teilmaterials in Form eines Filaments, umfassend eine polymere Komponente, umfassend:
a) 55 bis 95 Gew.% von mindestens einem Poly(aryl-etherketon) (PAEK) mit einem durchschnittlichen Molekulargewicht (Gewichtsmittel) (Mw) im Bereich von 75.000 bis 150.000 g/mol (bestimmt mittels Gelpermeationschromatographie (GPC) unter Verwendung von Phenol und Trichlorbenzol (1:1) bei 160 °C mit Polystyrolstandards), und
b) 5 bis 45 Gew.% von mindestens einem Poly(aryl-ethersulfon) (PAES),
bezogen auf das Gesamtgewicht der polymeren Komponente des Teilmaterials, zur Fertigung von dreidimensionalen Objekten.

12. Verwendung eines Teilmaterials, umfassend eine polymere Komponente, welche umfasst:
a) 55 bis 95 Gew.% von mindestens einem Poly(aryl-etherketon) (PAEK) mit einem durchschnittlichen Molekulargewicht (Gewichtsmittel) (Mw) im Bereich von 75.000 bis 150.000 g/mol (bestimmt mittels Gelpermeationschromatographie (GPC) unter Verwendung von Phenol und Trichlorbenzol (1:1) bei 160 °C mit Polystyrolstandards), und
b) 5 bis 45 Gew.% von mindestens einem Poly(aryl-ethersulfon) (PAES),
bezogen auf das Gesamtgewicht der polymeren Komponente des Teilmaterials, zur Fertigung eines Filaments zur Verwendung in der Fertigung von dreidimensionalen Objekten.

13. Verwendung nach Anspruch 11 oder 12, wobei das PAEK ein Poly(etheretherketon) (PEEK) mit einem durchschnittlichen Molekulargewicht (Gewichtsmittel) (Mw) im Bereich von 75.000 bis 150.000 g/mol ist (bestimmt mittels Gelpermeationschromatographie (GPC) unter Verwendung von Phenol und Trichlorbenzol (1:1) bei 160 °C mit Polystyrolstandards).

14. Verwendung nach einem der Ansprüche 11 bis 13, wobei das PAES ein Poly(biphenylethersulfon) (PPSU) und/oder ein Polysulfon (PSU) ist.

15. Verwendung nach einem der Ansprüche 11 bis 14, wobei das Teilmaterial auch bis zu 30 Gew.%, bezogen auf das Gesamtgewicht des Teilmaterials, von mindestens einem Additiv ausgewählt aus der Gruppe bestehend aus Füllstoffen, Färbungsmitteln, Schmiermitteln, Weichmachern, Flammhemmern, Nukleierungsmitteln und Stabilisatoren umfasst.

## Revendications

1. Procédé pour la fabrication d'un objet tridimensionnel (3D) avec un système de fabrication d'additif, comprenant :
- la mise à disposition d'un matériau de pièce sous forme d'un filament, comprenant un composant polymérique comprenant :
a) de 55 à 95 % en poids d'au moins une poly(aryléthercétone) (PAEK) possédant un poids moléculaire moyen en poids (Mw) dans la plage de 75 000 à 150 000 g/mole, tel que déterminé par chromatographie à perméation de gel (CPG) en utilisant du phénol et du trichlorobenzène (1:1) à 160 °C, avec des références de polystyrène, et
b) de 5 à 45 % en poids d'au moins une poly(aryléthersulfone) (PAES),
sur la base du poids total du composant polymérique du matériau de pièce, et
- l'impression de couches de l'objet tridimensionnel à partir du matériau de pièce qui comprend l'extrusion du matériau de pièce.

2. Procédé selon la revendication 1, le matériau de pièce comprenant également jusqu'à 30 % en poids, sur la base du poids total du matériau de pièce, d'au moins un additif choisi dans le groupe constitué par les charges, les colorants, les lubrifiants, les plastifiants, les agents ignifugeants, les agents de nucléation, et les stabilisants.

3. Procédé selon la revendication 1 ou 2, la PAEK étant une poly(étheréthercétone) (PEEK) possédant un poids moléculaire moyen en poids (Mw) dans la plage de 82 000 à 150 000 g/mole, tel que déterminé par chromatographie à perméation de gel (CPG) à l'aide de la norme ASTM D5296 avec des références de polystyrène.

4. Procédé selon l'une quelconque des revendications 1 à 4, la PAES étant une poly(biphényléthersulfone) (PPSU) et/ou une polysulfone (PSU).

5. Procédé selon l'une quelconque des revendications 1 à 3, comprenant en outre les étapes de :
- mise à disposition d'un matériau de support,
- impression de couches d'une structure de support à partir du matériau de support, et
- élimination d'au moins une partie de la structure de support de l'objet tridimensionnel.

6. Matériau de filament comprenant un composant polymérique comprenant :
a) de 57 à 95 % en poids d'au moins une poly(aryléthercétone) (PAEK) possédant un poids moléculaire moyen en poids (Mw) dans la plage de 75 000 à 150 000 g/mole (tel que déterminé par chromatographie à perméation de gel (CPG) en utilisant du phénol et du trichlorobenzène (1:1) à 160 °C, avec des références de polystyrène), et
b) de 5 à 43 % en poids d'au moins une poly(aryléthersulfone) (PAES),
sur la base du poids total du composant polymérique du matériau de filament.

7. Matériau de filament selon la revendication 6, la PAEK étant une poly(étheréthercétone) (PEEK) possédant un poids moléculaire moyen en poids (Mw) dans la plage de 75 000 à 150 000 g/mole (tel que déterminé par chromatographie à perméation de gel (CPG) en utilisant du phénol et du trichlorobenzène (1:1) à 160 °C, avec des références de polystyrène).

8. Matériau de filament selon l'une quelconque des revendications 6 et 7, la PAES étant une poly(biphényléthersulfone) (PPSU) et/ou une polysulfone (PSU).

9. Matériau de filament selon l'une quelconque des revendications 6 à 8, comprenant en outre de 0,1 à 30 % en poids d'un additif choisi dans le groupe constitué par les charges, les colorants, les lubrifiants, les plastifiants, les agents ignifugeants, les agents de nucléation, et les stabilisants.

10. Matériau de filament selon l'une quelconque des revendications 6 à 9, possédant une géométrie cylindrique et un diamètre variant de 1,5 à 3 mm ± 0,2 mm, de 1,6 à 2,9 mm ± 0,2 mm ou de 1,65 à 2,85 mm ± 0,2 mm.

11. Utilisation d'un matériau de pièce sous forme d'un filament, comprenant un composant polymérique comprenant :
a) de 55 à 95 % en poids d'au moins une poly(aryléthercétone) (PAEK) possédant un poids moléculaire moyen en poids (Mw) dans la plage de 75 000 à 150 000 g/mole (tel que déterminé par chromatographie à perméation de gel (CPG) en utilisant du phénol et du trichlorobenzène (1:1) à 160 °C, avec des références de polystyrène), et
b) de 5 à 45 % en poids d'au moins une poly(aryléthersulfone) (PAES),
sur la base du poids total du composant polymérique du matériau de pièce, pour la fabrication d'objets tridimensionnels.

12. Utilisation d'un matériau de pièce comprenant un composant polymérique comprenant :
a) de 55 à 95 % en poids d'au moins une poly(aryléthercétone) (PAEK) possédant un poids moléculaire moyen en poids (Mw) dans la plage de 75 000 à 150 000 g/mole (tel que déterminé par chromatographie à perméation de gel (CPG) en utilisant du phénol et du trichlorobenzène (1:1) à 160 °C, avec des références de polystyrène), et
b) de 5 à 45 % en poids d'au moins une poly(aryléthersulfone) (PAES),
sur la base du poids total du composant polymérique du matériau de pièce, pour la fabrication d'un filament pour une utilisation dans la fabrication d'objets tridimensionnels.

13. Utilisation selon la revendication 11 ou 12, la PAEK étant une poly(étheréthercétone) (PEEK) possédant un poids moléculaire moyen en poids (Mw) dans la plage de 75 000 à 150 000 g/mole (tel que déterminé par chromatographie à perméation de gel (CPG) en utilisant du phénol et du trichlorobenzène (1:1) à 160 °C, avec des références de polystyrène).

14. Utilisation selon l'une quelconque des revendications 11 à 13, la PAES étant une poly(biphényléthersulfone) (PPSU) et/ou une polysulfone (PSU).

15. Utilisation selon l'une quelconque des revendications 11 à 14, le matériau de pièce comprenant également jusqu'à 30 % en poids, sur la base du poids total du matériau de pièce, d'au moins un additif choisi dans le groupe constitué par les charges, les colorants, les lubrifiants, les plastifiants, les agents ignifugeants, les agents de nucléation, et les stabilisants.
